# EUROPEAN PATENT APPLICATION

(11) **EP 4 722 095 A1**
(43) Date of publication of application: **08.04.2026**
(21) Application number: 24306643.8
(22) Date of filing: 07.10.2024
(51) Int. Cl.: B63B 21/50, B63B 35/44, F03D 13/20, F03D 13/25, B63B 1/10

(54) **FLOATING PLATFORM STABILIZATION SYSTEM AND METHOD OF INSTALLATION**

(71) Applicant: Technip Energies France, 92741 Nanterre Cedex (FR)
(72) Inventor: Gonzalez-Maya, Miguel, 92741 Nanterre Cedex (FR)
(74) Representative: Edson, Russell Gregory

(57) **Abstract**

A floating platform system can be provided to facilitate mounting of and for supporting a structure on a floating platform. For example, the floating platform system can include the floating platform. The floating platform system can also include a ballast receiving volume inside the floating platform for receiving a ballasting liquid. The floating platform system can further include a mounting surface on the floating platform for mounting a structure. Additionally, the floating platform can include a downwardly-oriented stabbing guide.

## Description

### Technical Field

The present disclosure relates generally to stabilization of floating platforms and methods of stabilizing a floating platform and mounting a structure on the floating platform.

### Background

An offshore wind turbine is composed of different sections and components that may be mounted to a semisubmersible hull type such as a floating foundation (or floating platform) and may be deployed into a body of water. The floating unit (e.g., floating foundation and wind turbine mounted) can be towed to a wind farm field for offshore hookup installation, such as mooring lines and electrical subsea hurray cable installation. Ending of the construction cycle with the offshore installation, wind-caused rotation of a rotor blade of the wind turbine can drive a generator to produce electrical energy. The floating foundation of the wind turbine may include one or more columns, one or more pontoons, and a mating area to receive the first component of the wind turbine or a combination thereof, which can provide buoyancy in the body of water to keep the wind turbine above a water level of the body of water in a stable manner. The components of the wind turbine can be mounted to the floating foundation while the floating foundation is deployed in the body of water adjacent to a quay. Mounting the wind turbine components onto the floating hull structure while the floating foundation is in the body of water may be difficult due to the size and weight of the structure, undesirable movement or changes in location of the floating platform due to wind, wave, or other suitable environmental conditions, a lack of infrastructure at the quay, etc.

### Summary

As used below, any reference to a series of examples is to be understood as a reference to each of those examples disjunctively (e.g., "Examples 1-4" is to be understood as "Examples 1, 2, 3, or 4").

Example 1 is a method for mounting a structure on a floating platform, the method comprising: positioning a floating platform over a subsurface alignment structure in a body of water; lowering the floating platform in the body of water such that a stabbing guide of the floating platform engages the subsurface alignment structure; tensioning the floating platform to a second platform; and mounting a structure on the floating platform with the stabbing guide engaged with the subsurface alignment structure and the floating platform tensioned to the second platform.

Example 2 is the method of example(s) 1, wherein lowering the floating platform comprises adding a ballasting liquid to the floating platform.

Example 3 is the method of example(s) 1-2, wherein during lowering of the floating platform in the body of water such that the stabbing guide of the floating platform engages the subsurface alignment structure, a tapered guide portion of the stabbing guide initially contacts the subsurface alignment structure to guide the floating platform into alignment with the subsurface alignment structure, wherein the subsurface alignment structure engaged by the stabbing guide is a mooring pile.

Example 4 is the method of example(s) 3, wherein during lowering of the floating platform in the body of water such that the stabbing guide of the floating platform engages the subsurface alignment structure, a first lower section of the tapered guide portion receives a second upper section of the mooring pile, wherein the tapered guide portion is a first tapered guide portion that comprises the first lower section and a first upper section, wherein the first lower section is wider than the first upper section, wherein the mooring pile comprises a second tapered guide portion with a second lower section and the second upper section, wherein the second lower section is wider than the second upper section.

Example 5 is the method of example(s) 2-3, wherein the step of adding a ballasting liquid to the floating platform comprises adding the ballasting liquid to a plurality of float columns of the floating platform, the float columns extending between a top side and a bottom side of the floating platform.

Example 6 is the method of example(s) 5, wherein lowering the floating platform in the body of water such that the stabbing guide of the floating platform engages the subsurface alignment structure comprises lowering the floating platform in the body of water such that a plurality of stabbing guides located on the plurality of float columns at the bottom side of the floating platform engage a plurality of subsurface alignment structures.

Example 7 is the method of example(s) 6, wherein tensioning the floating platform to the second platform comprises tensioning a plurality of mooring lines extending between a first plurality of tension line receivers located at the top side of the floating platform and a second plurality of tension line receivers on the second platform, the second platform comprising a quay.

Example 8 is the method of example(s) 7, wherein tensioning the plurality of mooring lines extending between the first plurality of tension line receivers and the second plurality of tension line receivers comprises adjusting a length of at least one of the plurality of mooring lines using a tension device.

Example 9 is the method of example(s) 8, wherein adjusting the length of at least one of the plurality of mooring lines using the tension device comprises adjusting the length of the at least one of the plurality of mooring lines using a winch positioned at a surface of the quay.

Example 10 is the method of example(s) 5, wherein mounting the structure on the floating platform comprises mounting a vertically extending tower of a wind turbine on at least one of the plurality of float columns.

Example 11 is a floating platform system comprising: a floating platform; a ballast receiving volume inside the floating platform, the ballast receiving volume being a volume within the floating platform in which a ballasting liquid is received; a mounting surface on the floating platform, the mounting surface being a surface on the floating platform to which a structure is mounted; and the floating platform further comprising a stabbing guide.

Example 12 is the floating platform system of example(s) 11, wherein the stabbing guide is a mooring pile receiving stabbing guide.

Example 13 is the floating platform system of example(s) 11-12, wherein the stabbing guide comprises a tapered guide portion.

Example 14 is the floating platform system of example(s) 13, wherein the tapered guide portion comprises a lower section and an upper section, wherein the lower section is wider than the upper section.

Example 15 is the floating platform system of example(s) 13, wherein the tapered guide portion comprises a frustoconical shape.

Example 16 is the floating platform system of example(s) 11-15, wherein the floating platform comprises a top side, a bottom side, and a plurality of float columns extending between the top side and the bottom side, wherein the plurality of float columns comprise the ballast receiving volume.

Example 17 is the floating platform system of example(s) 16, wherein the stabbing guide comprises a plurality of stabbing guides located at the bottom side of the floating platform.

Example 18 is the floating platform system of example(s) 16-17, wherein at least some of the stabbing guides are located on the plurality of float columns.

Example 19 is the floating platform system of example(s) 16-18, wherein the floating platform further comprises a plurality of tension line receivers located at the top side of the floating platform.

Example 20 is the floating platform system of example(s) 16-19, wherein the mounting surface is a wind turbine support mounting surface on one of the plurality of float columns.

### Brief Description of the Drawings

FIG. 1 is a schematic elevation view of a floating unit according to some embodiments of the present disclosure.
FIG. 2A is a perspective view of a floating platform with stabbing guides according to some embodiments of the present disclosure.
FIG. 2B is another perspective view of a floating platform with stabbing guides according to some embodiments of the present disclosure.
FIG. 3 is a top view of an example of a floating platform system for supporting a structure according to some embodiments of the present disclosure.
FIG. 4 is a side view of an example of a stabbing guide and subsurface alignment structure according to some embodiments of the present disclosure.
FIG. 5 is a side view of an example of a stabbing guide engaged with a sub-surface according to some embodiments of the present disclosure.
FIG. 6 is a flowchart of a process for mounting a structure on the floating platform according to some examples of the present disclosure.

### Detailed Description

Certain aspects and examples of the present disclosure relate to a floating platform system for supporting a structure. The floating platform system can include a floating platform, which may be positioned next to a second platform (e.g. a quay) in or adjacent to a body of water such as an ocean, sea, lake, or other body of water, whether natural or manmade. The floating platform can be stabilized by the floating platform system to enable the structure to be moved from the second platform and mounted onto the floating platform in a precise, safe, and efficient manner. That is, the floating platform system can prevent undesirable movements of the floating platform while mounting the structure to prevent damage to the second platform, the structure, the floating platform, or the combination thereof. The undesirable movements may be due to wind, waves, or other suitable environmental conditions. The floating platform can be a semisubmersible platform, a tension leg platform, a barge platform, a spar platform or the like. The structure may be a wind turbine or another structure that can be mounted on a floating platform.

To facilitate stabilization, the floating platform may include a downwardly-oriented stabbing guide. A stabbing guide may be a component of the floating platform that guides the platform relative to and engages with a subsurface alignment structure in the body of water (e.g. a mooring pile or other subsurface alignment structure) when the stabbing guide is lowered down onto the subsurface alignment structure. The stabbing guide can be located at (e.g., welded, bolted, or otherwise coupled with) a float column or other component of the floating platform. The stabbing guide can be downwardly-oriented in that a tapered guide portion or other suitable portion of the stabbing guide that can engage with a subsurface alignment structure is directed toward a floor of a body of water when the floating platform is deployed in the body of water. The subsurface alignment structure (e.g. the mooring pile or other subsurface alignment structure) is rigidly fixed in and extends upwardly from a floor of a body of water, and when the stabbing guide is lowered onto it, the stabbing guide will engage the subsurface alignment structure thereby stabilizing the floating platform.

In some implementations the floating platform may including a stabbing guide that engages a subsurface alignment structure. In some implementations the floating platform may include multiple stabbing guides that each engage a subsurface alignment structure. The stabbing guides can include extension members (e.g., a tube), which may be welded, bolted, or otherwise coupled with a component (e.g., a float column) of the floating platform. The stabbing guides can also include the tapered guide portion at a bottom surface of the extension member. The stabbing guides may be made from, for example, steel, plastic, other materials, or a combination of materials. The tapered guide portions of the stabbing guides can be sized, shaped, and oriented to engage with subsurface alignment structures in the body of the water.

Additionally, to stabilize the floating platform, the floating platform may be ballasted such that it and the associated stabbing guides are lowered in the body of water, with the stabbing guides engaging the subsurface alignment structures. The subsurface alignment structures may be, for example, mooring piles positioned at least partially within a floor of the body of water. The floating platform can include float columns, which may be interconnected by connecting members. The float columns may be hollow or partially hollow and may define a ballast receiving volume inside the floating platform for receiving a ballasting liquid. Additionally or alternatively, at least some of connecting members can act as pontoons, and can therefore also have internal ballast receiving volumes for receiving ballasting liquid. In either case, the ballast receiving volumes of the floating platform can be being a volume within the floating platform in which a ballasting liquid can be received. To ballast the floating platform, water may be selectively transferred between the internal ballast volumes of the floating platform and the body of water. For example, water can be added to the internal ballast volumes of the floating platform to cause the floating platform lower with respect to a surface of the body of water (i.e., move closer to a floor of the body of water).

As a result of lowering the floating platform, the tapered guide portion of one or more stabbing guides can contact a respective one of the subsurface alignment structures in the floor of the body of water. The contact can guide the floating platform into alignment with the subsurface alignment structures. As a result of lowering and aligning the floating platform, the stabbing guides can engage with the respective subsurface alignment structures. That is, one or more stabbing guides can receive a subsurface alignment structure. The engagement of one or more stabbing guide with one or more subsurface alignment structures can stabilize the floating platform with respect to the floor of the body of water, which can prevent tipping or other undesirable movements of the floating platform. More specifically, the engagement can prevent the floating platform from tipping when structure is being mounted on the floating platform.

To further stabilize the floating platform, the floating platform system may be used to tension the floating platform to a second platform (e.g. a quay). For example, there can be a first set of tension line receivers positioned on the floating platform and there can be a second set of tension line receivers positioned on the second platform. The tension line receivers on the second platform can be bollards or other suitable durable, stable structures to which mooring lines can be coupled. The tension line receivers on the floating platform can include any suitable connector that can be coupled with the floating platform and a mooring line such as, but not limited to, shackles, D-shackles, C-links, pear links, chain stopper connectors, pin connectors, and swivel connectors. Thus, tensioning the floating platform to the second platform can include coupling a first set of mooring lines between one of the tension line receivers on the floating platform and one of the bollards or other stable, durable structures on the second platform. In this way, a position of the floating platform next to the second platform can be secured.

Additionally, some of the tension line receivers on the second platform can be tension devices. Tension devices can include winches or other suitable devices usable to adjust a length of associated mooring lines. Therefore, tensioning the floating platform to the second platform can further include coupling a second set of mooring lines between the tension line receivers on the floating platform and the tension devices on the second platform. The tension devices can, in some examples, be used to adjust tension on corresponding mooring lines by adjusting a length of the corresponding mooring line while the floating platform is moored to the second platform. The length of the mooring line can be defined as the distance between the coupling point of the mooring line at the second platform and the coupling point of the mooring line at the floating platform.

The ability to adjust tension and/or length on the mooring lines using the tension devices can be used to fine tune the positioning and stability of the floating platform. For example, using a tension device to shorten a mooring line can change a position of the floating platform relative to the second platform (e.g., by moving the floating platform closer to the second platform). Shortening the mooring line may further increase tension on the mooring line, thereby increasing the force being used to hold the floating platform in position. Alternatively, using the tension devices to lengthen a mooring line can allow positioning of the floating platform further from the second platform and/or decrease tension on the mooring line. This may be useful for proper positioning of the floating platform above the subsurface alignment structures.

Once the floating platform is moored to the second platform (e.g., the quay) and the stabbing guides are engaged with the subsurface alignment structures, the structure can be mounted to the floating platform. The combination of mooring the floating platform to the second platform and engaging the stabbing guides with the subsurface alignment structures can prevent undesirable movements of the floating platform while mounting the structure, thereby minimizing damage to the second platform, the structure, or the floating platform during mounting.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

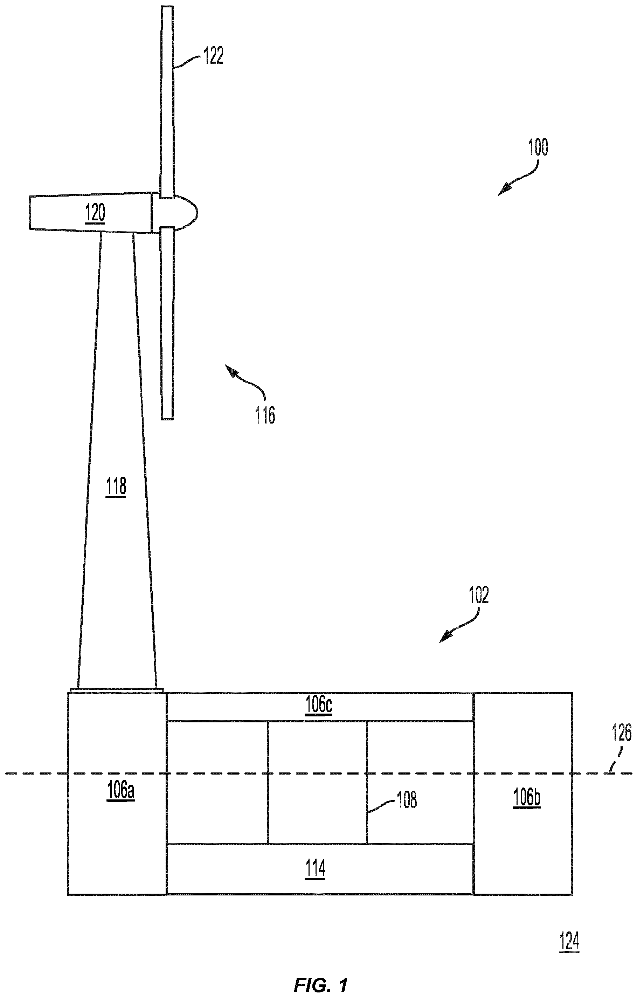

FIG. 1 is a schematic elevation view of a floating unit 100 according to one example of the present disclosure. As shown, the floating unit 100 can include a floating wind turbine platform 102. In this example, the floating wind turbine platform 102 is a semi-submersible platform of generally triangular shape (when viewed from the top down), with three float columns 106a-c defining vertexes of the platform. In certain implementations, the floating wind turbine platform 102 may be a tension leg platform, a spar platform, a barge platform, or any other suitable floating platform on which a structure (e.g., a wind turbine 116) can be mounted. Moreover, in other examples, a different number of float columns and other arrangements of the float columns are possible.

The float columns 106a-c may be interconnected by connecting members. The connecting members may be rigid members and/or the connecting members may be hollow members. In the particular example of FIG. 1, pairs of upper connecting members 112 and lower connecting members 114 interconnect the float columns 106a-c. At least the lower connecting members 114 may be hollow and may serve as pontoons in some examples.

Additionally, as represented in FIG. 1, the floating wind turbine platform 102 has been deployed into a body of water 124 (e.g., an ocean). A surface 126 of the body of water 124 is indicated by a dashed line. The location of the surface 126 of the body of water 124 relative to the float columns 106a-c represents a submerged depth of the floating wind turbine platform 102 in examples in which the floating wind turbine platform 102 is a semi-submersible platform. As also represented in FIG. 1, the floating wind turbine platform 102 can have a level floating orientation in the body of water 124. As such, there is minimal inclination of the float columns 106a-c or a vertically extending tower 118.

The floating unit 100 can further include the wind turbine 116, which may be affixed to the wind turbine platform 102, as shown. In this example, the wind turbine 116 includes the vertically extending tower 118, a nacelle 120 enclosing a gearbox and a generator, and a rotatable rotor blade 122. The vertically extending tower 118 is securely affixed to a top of a first float column 106a in the example of FIG. 1, but other wind turbine locations and affixation techniques relative to the floatable structure 104 are possible in other examples.

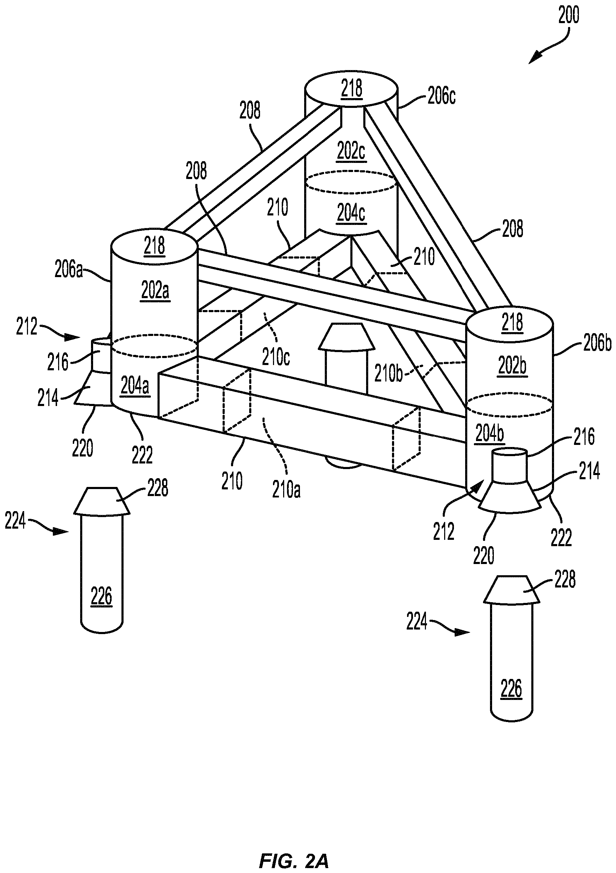

FIGS. 2A-B show a perspective view of a floating platform 200 with stabbing guides 212 according to one example of the present disclosure. The floating platform 200 may include similar components and be configured similarly to the floating wind turbine platform 102 depicted in FIG. 1. As shown, the floating platform 200 can include three float columns 206a-c. In this example, the floating platform 200 is a generally triangular-shaped platform, and the three float columns 206a-c define (are located at) the vertices of the generally triangular shaped platform.

The float columns 206a-c of the floating platform 200 can be interconnected. Interconnection of the float columns 206a-c can be accomplished, for example, using various types of solid or hollow connecting members provided in various quantities. In some examples, a connecting member may extend between each of the float columns 206a-c. In other examples, an array of connecting members may extend between each of the float columns 206a-c. In some examples, the connecting members may form a truss structure or may be otherwise arranged between the float columns 206a-c.

In the particular example of the floating platform 200 illustrated in FIGS. 2A-B, the float columns 206a-c are rigidly interconnected by cooperating pairs of upper connecting members 208 and lower connecting members 210. At least some of the upper connecting members 208 and the lower connecting members 210 may be rigid elements. Additionally, at least some of the upper connecting members 208 and the lower connecting members 210 may be hollow elements. For example, the upper connecting members 208 and the lower connecting members 210 may be lengths of steel tubing of similar or dissimilar cross-sectional dimensions, which can be affixed to the float columns 206a-c by welding or otherwise. While the upper connecting members 208 and the lower connecting members 210 are shown to have a generally square or rectangular cross-sectional shape in the example of FIGS. 2A-B, other cross-sectional shapes are also possible. For example, the upper connecting member 208 and/or the lower connecting member 210 may have a round cross-sectional shape.

In some examples, at least some of the lower connecting members 210 may serve as pontoons to provide at least some buoyancy to the floating platform 200. To serve as pontoons, at least some of the lower connecting members 210 may define an internal ballast receiving volume indicated at 210a-c. The internal ballast receiving volumes 210a-c of the lower connecting members 210 can be hollow sections of the lower connecting members 210 and can receive and contain a ballasting liquid (e.g., water). The lower connecting members 210 can be positioned on a bottom side of the floating platform 200 (i.e., below a top surface 218 of the float columns 206a-c and/or below the upper connecting members 208).

Additionally, the float columns 206a-c of the floating platform 200 can be of various cross-sectional shape. For example, the float columns 206a-c may be generally polygonal, or generally cylindrical in cross-sectional shape as shown. The float columns 206a-c can be elongate, having a length/height dimension that is greater than a cross-sectional dimension(s). A bottom surface 222 of the float columns 206a-c may align with a bottom surface of the lower connecting members 210 as shown, or, in some examples, the float columns 206a-c may extend past the lower connecting members 210.

In some examples, at least some of the float columns 206a-c may be hollow or partially hollow and may define an internal ballast receiving volume 202a-c for receiving and containing a ballasting liquid 204a-c. An internal ballast receiving volume 202a-c may include the hollow interior of the respective one of the float columns 206a-c or a portion thereof. At least some of the float columns 206a-c may also include a corresponding intake port (not shown) for fluid communication with a body of water in which the floating platform 200 is deployed. Water may be selectively transferred between each internal ballast receiving volume 202a-c of the float columns 206a-c and the body of water via the intake ports. The selective transfer between the internal ballast receiving volumes 202a-c and the body of water can change a position of the floating platform with respect to a surface (e.g., surface 126) of the body of water. For example, adding ballasting liquid (e.g., receiving water via the intake ports) to the internal ballast receiving volumes 202a-c of the floating platform 200 can lower the floating platform 200 with respect to the surface of the body of water.

Moreover, the stabbing guides 212 can be positioned on components of the floating platform 200, such as on the lower connecting members 210, the float columns 206a-c, or other components. In the example of FIGS. 2A-B there may be a stabbing guide 212 positioned at a first float column 206a, a stabbing guide (not shown) positioned at a second float column 206b, and a stabbing guide 212 positioned at a third float column 206c. In other implementations, there may be more than one stabbing guide associated with at least some of the float columns 206a-c and/or the stabbing guides 212 may be positioned on other components of the floating platform 200.

The stabbing guides 212 can include extension members 216 (e.g., a hollow or solid tube) extending from a component (e.g., the float columns 206a-c) of the floating platform 200. The extension members 216 of the stabbing guides 212 may be generally polygonal, or generally cylindrical in cross-sectional shape as shown. The extension members 216 of the stabbing guides 212 can also be elongate, having a length/height dimension that is greater than a cross-sectional dimension(s). The extension members 216 can extend from a bottom side of the floating platform 200 (e.g., near the lower connecting members 210). For example, the extension members 216 can extend from the lower connecting members 210 and/or, as shown, from bottom sides of the float columns 206a-c. The bottom sides of the float columns 206a-c can include locations on the float columns 206a-c below the top surfaces 218 of float columns 206a-c. Similarly, the bottom side of the floating platform 200 can include locations on the floating platform 200 that are below the top surfaces 218 of the float columns 206a-c. The extension members 216 can be welded, bolted, or otherwise coupled with the float columns 206a-c or another component of the floating platform 200. Although the extension members are shown as cylindrical and having a relatively small length in comparison with the float columns 206a-c, the extension members 216 may be other shapes and/or have different dimensions in other examples.

Additionally, at bottom surfaces of the extension members 216 (i.e., at end surfaces of the extension members 216 positioned closer to a floor of a body of water than other end surfaces of the extension members 216), there can be tapered guide portions 214. The tapered guide portions 214 can be sized, shaped, and oriented to receive a subsurface alignment structure 224. The subsurface alignment structure 224 can be a mooring pile or other subsurface alignment structure positioned at least partially within a floor of the body of water. In examples in which the subsurface alignment structures 224 are mooring piles, the stabbing guides 212 can be a mooring pile receiving stabbing guides (i.e., stabbing guides that can receive and engage with at least a portion of a mooring pile). The tapered guide portions 214 may define a conical, frustoconical, or other shaped housing in which at least a portion of a subsurface alignment structure 224 can fit. A bottom surface 220 of the tapered guide portions 214 may align with the bottom surfaces 222 of the float columns 206a-c, or the bottom surfaces 220 of the tapered guide portions 214 may extend past the bottom surfaces 222 of the float columns 206a-c.

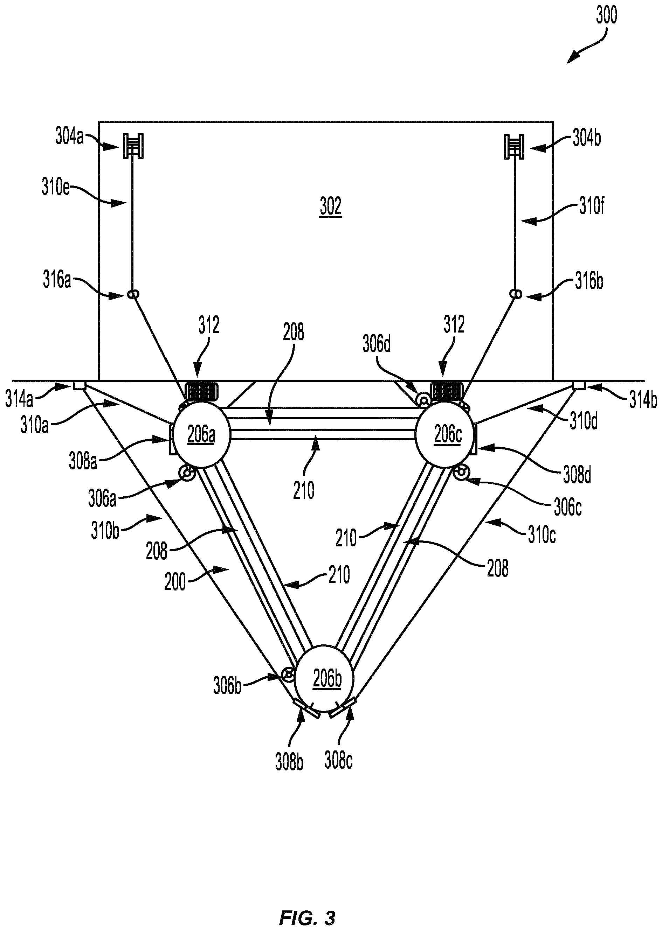

As shown in FIG. 2A there can be subsurface alignment structures 224 positioned below the floating platform 200. For example, the floating platform 200 can be positioned adjacent to a second platform (e.g., quay 302 shown in FIG. 3) in a body of water. The subsurface alignment structures 224 can be also positioned adjacent to the second platform and can be inserted in the floor of the body of water. For example, a sleeve portion 226 of the subsurface alignment structures can be at least partially inserted into the floor of the body of water while a tapered guide portion 228 of the subsurface alignment structures 224 can protrude from the floor of the body of water.

As mentioned above, in some examples, the subsurface alignment structures may be mooring piles. A mooring pile is a structure secured along a floor of the body of water, such as an ocean floor. A mooring pile can be secured to the ocean floor by driving, embedding, screwing, or otherwise forcibly inserting at least a portion of the mooring pile into the ocean floor. Examples of mooring piles can include driven piles, suction piles, drilled piles, spring piles, breasting dolphins, gravity anchors, suction anchors, or combinations thereof.

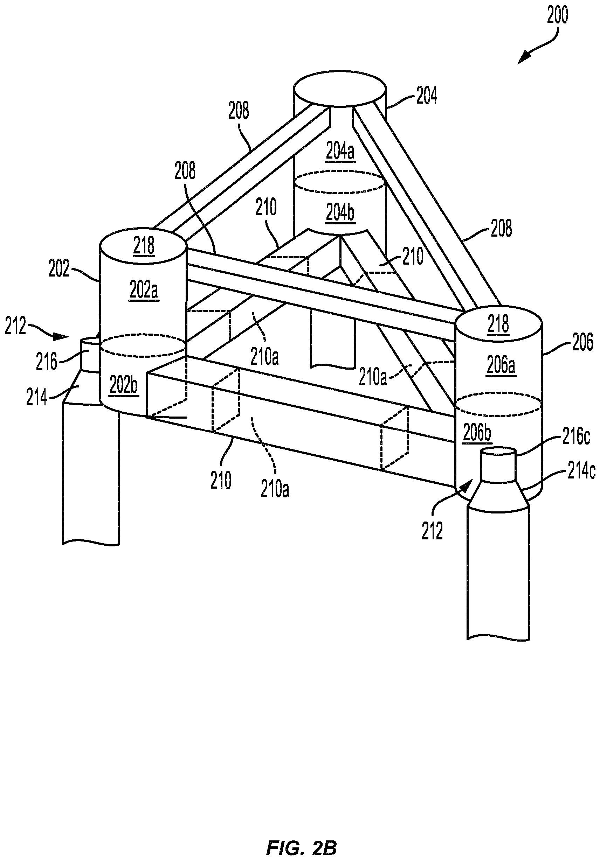

As also mentioned above, there can be at least one ballast receiving volume inside the floating platform 200 for receiving a ballasting liquid (e.g., internal ballast receiving volumes 202a-c of the float columns 206a-c and internal ballast receiving volumes 210a-c of the lower connecting members 210). Adding ballasting liquid to at least some of the ballast receiving volumes of the floating platform 200 can lower the platform with respect to a surface of a body of water. As a result of lowering the floating platform 200, at least some of stabbing guides 212 can engage with a subsurface alignment structure 224. More specifically, the tapered guide portion 214 of at least some of the stabbing guides 212 can engage with one of the tapered guide portions 228 of the subsurface alignment structures 224. The engagement of the stabbing guides 212 with the subsurface alignment structures 224 can stabilize the floating platform 200 (e.g., by minimizing a risk of the floating platform 200 tipping when the structure is mounted). FIG. 2B shows an example of the stabbing guides 212 engaged with the subsurface alignment structures 224.

In some implementations the guide portions may not be tapered and therefore may have other shapes. For example, the guide portions may be hollow cylinders or another structure with an internal recess shaped to receive and fit relatively tightly around a subsurface alignment structure 224. Additionally, in some implementations, the stabbing guides 212 may not include the extension members 216. In such examples, the stabbing guides 212 can include the guide portions coupled along a bottom side of one of the float columns 206a-c and oriented to receive a subsurface alignment structure 224.

FIG. 3 is a schematic, top view of an example of a floating platform system 300 for supporting a structure according to some embodiments of the present disclosure. In the floating platform system 300, the floating platform 200 can be positioned next to a second platform (e.g., a quay 302). The quay 302 can be a platform lying within, alongside, or projecting into a body of water. The floating platform 200 may therefore be floating in the body of water adjacent to the quay 302. Components of the floating platform system 300 (e.g., stabbing guides and tension line receivers 308a-d) can facilitate stable positioning of the floating platform 200 adjacent to the quay 302. In this way, a structure (e.g., a wind turbine) can be mounted from the quay 302 on to the floating platform 200 with a minimal risk of damage to the quay 302, the floating platform 200, the structure itself, or a combination thereof.

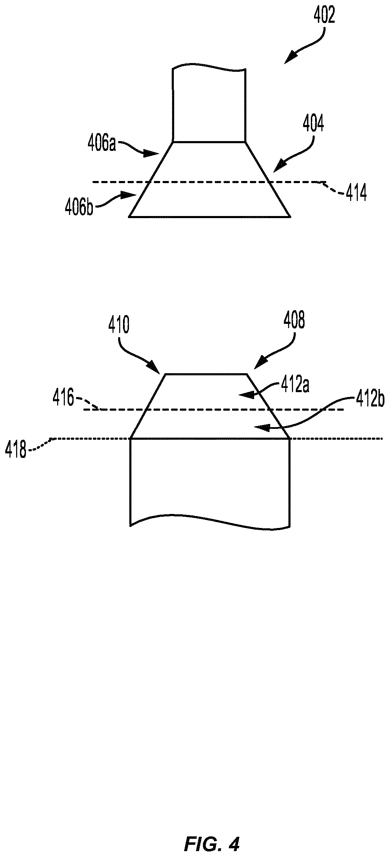

FIG. 3 shows, stabbing guide and subsurface alignment structure arrangements 306a-d. The stabbing guide and subsurface alignment structure arrangements 306a-d can include a stabbing guide (e.g., stabbing guides 212 depicted in FIGS. 2A-B) engaged with a subsurface alignment structure (e.g., subsurface alignment structure 224 depicted in FIGS. 2A-B). Although FIG. 3 shows four stabbing guide and subsurface alignment structure arrangements, a different number of arrangements is possible in other examples. A stabbing guide and subsurface alignment structure arrangement is shown and described in more detail below with respect to FIGS. 4-5. The stabbing guide and subsurface alignment structure arrangements 306a-b can provide stability to the floating platform 200, by, for example, resisting longitudinal forces imposed on the floating platform 200. That is, the stabbing guide and subsurface alignment structure arrangements 306a-b can prevent the floating platform 200 from tipping. The longitudinal forces may be imposed while mounting a structure on the floating platform 200. The stabbing guide and subsurface alignment structure arrangements 306a-b can further prevent twisting or lateral movement of the floating platform 200 by resisting torsional or lateral forces imposed on the floating platform 200 by, for example, wind or waves.

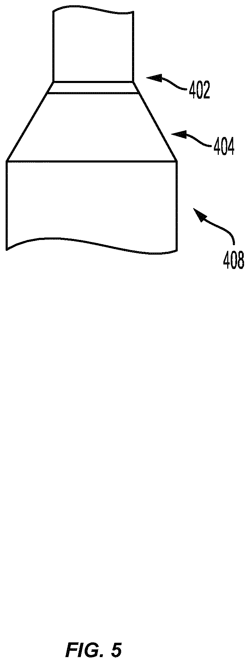

Mounting a structure on the floating platform 200 can involve mounting the structure on one or more mounting surfaces of the floating platform. The structure can be mounted with the stabbing guides of the floating platform 200 engaged with the subsurface alignment structures. An example of a stabbing guide 212 engaged with a subsurface alignment structure 224 is shown in FIG. 3 and another example of a stabbing guide 402 engaged with a subsurface alignment structure 408 is shown in FIG. 5. A stabbing guide and mooring pile can be considered engaged which at least a portion of the mooring pile is positioned within the stabbing guide. As will be described in more detail below, the structure can also be mounted while the floating platform is tensioned to the second platform (e.g., quay 302). To mount the structure, the structure (or a component of the structure) can be lifted or otherwise moved from the quay 302 on to the mounting surface of the floating platform 200.

A mounting surface can be a surface on the floating platform 200 to which a structure can be mounted. That is, the mounting surface can be any surface on the floating platform 200 with adequate rigidity, surface area, and strength for supporting the structure. For example, in some implementations, the top surfaces 218 of the float columns 206a-c can be mounting surfaces on which the structure can be mounted. In the particular example shown in FIG. 1, a top surface of the first float column 106a is the mounting surface on which the structure (i.e., wind turbine 116) is positioned. In other examples, the mounting surfaces can be on the upper connecting members 208, can be or include a protrusion on the float columns 206a-c or another component of the floating platform 200, or can be other surface areas on the floating platform 200 on which a structure can be mounted. Moreover, in other implementations, the mounting surfaces can be on a platform, float column, or the like positioned in or near a center with respect to the float columns 206a-c. In examples in which the structure is a wind turbine (e.g., wind turbine 116) a support (e.g., a vertically extending tower 118 of the wind turbine 116) can be the portion of the structure that is located and mounted on one or more of the mounting surfaces. Therefore, the one or more mounting surfaces may include a wind turbine support mounting surface on one of the float columns 206a-c.

The floating platform system 300 can further include tension line receivers. For example, there may be a first set of tension line receivers 308a-d positioned at the floating platform 200. The tension line receivers 308a-d positioned at the floating platform 200 can include any suitable connector (e.g., shackles, D-shackles, C-links, pear links, chain stopper connector, pin connector, and swivel connector, or the like) to which one of the mooring lines 310a-f (e.g., anchor chains, wire ropes, fiber ropes, or the like) can be coupled.

The tension line receivers 308a-d can be located near the top side of the floating platform 200 (e.g., adjacent to the mounting surfaces and/or the upper connecting members 208). In other examples, at least some of the tension line receivers 308a-d can be located near the bottom side of the floating platform 200 (e.g., adjacent to the lower connecting members 310). In the example shown, the tension line receivers 308a-d can be located on the float columns 206a-c. In other examples, the tension line receivers 308a-d can be located on the upper connecting members 208, the lower connecting members 210, or elsewhere on the floating platform 200.

Additionally, a second set of tension line receivers can be positioned on the quay 302. The tension line receivers on the quay 302 can include bollards 314a-b, pulleys 316a-b, tension devices 304a-b (e.g., winches), or other suitable devices to which mooring lines can be connected.

The mooring lines 310a-f can extend between the tension line receivers 308a-d on the floating platform 200 and the tension line receivers on the quay 2302. For example, a first mooring line 310a can extend between a first tension line receiver 308a on a first float column 206a and a first bollard 314a on the quay 302. Similarly, a second mooring line 310b can extend between a second tension line receiver 308b on a second float column 206b and the first bollard 314a. Additionally, a third mooring line 310c can extend between a third tension line receiver 308c on the second float column 206b and a second bollard 314b and a fourth mooring line 310d can extend between a fourth tension line receiver 308d on a third float column 206c and the second bollard 314b. The mooring lines 310a-d extending between the tension line receivers 308a-d and the bollards 314a-b can moor the floating platform 200 to the quay 302 to at least partially stabilize the floating platform 200 (e.g., by minimizing a risk of the floating platform 200 from moving away from the quay 302). There may further be buoys 312 positioned between the floating platform 200 and the quay 302 to prevent the floating platform 200 from directly contacting the quay 302, which may cause damage to the floating platform 200, the quay 302, or a combination thereof.

Additionally, a fifth mooring line 310e can extend between the first tension line receiver 308a (or another component of the floating platform 200) and a first tension device 304a on the quay 302. Similarly, a sixth mooring line 310f can extend between the fourth tension line receiver 308d (or another component of the floating platform 200) and a second tension device 304b on the quay 302. In some examples, pulleys 316a-b can be positioned on the quay 302 between the tension devices 304a-b and the floating platform 200. The pulleys 316a-b can direct the mooring lines 310e-f to the tension devices 304a-b.

When extending between the tension line receivers 308a-d on the floating platform 200 and the tension line receivers on the quay 302, the mooring lines 310a-f can have minimal slack to prevent movement of the floating platform 200 relative to the quay 302. Thus, the tension on at least some of of the mooring lines 310a-f may be relatively high. In this way, the tension on the mooring lines 310a-f can counteract forces associated with movement of the floating platform 200, which may occur due to forces exerted on the floating platform by wind, current, waves, or other suitable environmental conditions. For example, the tension on the mooring lines 310a-f can counteract and therefore minimize an impact of forces associated with lateral or twisting movement of the floating platform caused by the environmental conditions.

Additionally, the tension devices 304a-b can be winches or other suitable devices that can be used to adjust a length of at least some of the mooring lines 310e-f. In this way, the tension devices 304a-b can be used to adjust tension on the mooring lines 310e-f, which can facilitate fine tuning of the stabilization of the floating platform 200 adjacent to the quay 302. For example, if environmental conditions cause an increase in forces imposed on the mooring lines by the floating platform 200 (e.g., if wind causes movement of the floating platform, thereby causing an increase in lateral and/or tortional forces) it may be beneficial to increase tension in the mooring lines to facilitate better resistance against forces. Tension can be increased on the mooring lines by, for example, using the winches to shorten the mooring lines. Additionally, it may be beneficial to reposition the floating platform 200 (e.g., to align the stabbing guides with subsurface alignment structures). The adjustment of the mooring line length can help at least in part in adjusting a position of the floating platform 200 (e.g., by allowing the floating platform 200 to be further from the quay 302 or by pulling the floating platform 200 closer to the quay 302).

Although a particular number and arraignment of components is shown in FIG. 3, other examples of the floating platform system can include a different number or arrangement of components. For example, there may be a different number of tension devices, bollards, mooring lines, pulleys, etc. and the tension devices, bollards, mooring lines, pulleys, etc. may be positioned along the quay or floating platform in different locations.

FIG. 4 is a side view of an example of a stabbing guide 402 and subsurface alignment structure 408 according to some embodiments of the present disclosure. The stabbing guide 402 and subsurface alignment structure 408 can correspond to any of the stabbing guides 212 and subsurface alignment structures 224 depicted in FIGS. 2A-B. The stabbing guide 402 can be shaped and sized to receive the subsurface alignment structure 408. For example, as shown, the stabbing guide 402 can have a tapered guide portion 404. The tapered guide portion 404 can have a first lower section 406b below dashed line 414 and an first upper section 406a above the dashed line 414. The first lower section 406b can be wider than the first upper section 406a. As shown, the tapered guide portion 404 can be conical or frustoconical shape. In other examples, the tapered guide portion 404 can be other shapes. The tapering cross section (i.e., the first lower section 406b being wider than the first upper section 406a) of the stabbing guide 402 can provide a relatively large cross-sectional area in which the stabbing guide 402 receives the subsurface alignment structure 408. The tapering cross section of the tapered guide portion 404 can further help to guide the subsurface alignment structure 408 into engagement with the stabbing guide 402.

A shape and size of the subsurface alignment structure 408 can correspond to the stabbing guide 402. For example, a tapered guide portion 410 of the subsurface alignment structure 408 can have a second upper section 412a above dashed line 416 and a second lower section 412b below the dashed line 418. The second lower section 412b of the tapered guide portion 410 can be wider than the second upper section 412a. The tapered guide portion 410 of the subsurface alignment structure 408 can also be a conical or frustoconical shape. In other examples, the tapered guide portion 410 can be other shapes. In such examples, the tapered guide portion 410 can similarly be shaped, sized, and oriented to correspond to the stabbing guide 402. That is, the tapered guide portion 410 of the subsurface alignment structure 408 can be sized, shaped, and oriented to facilitate engagement of the subsurface alignment structure 408 with the stabbing guide 402.

The shape of the subsurface alignment structure 408 and of the stabbing guide 402 can further create a engagement point for the engagement of the stabbing guide 402 and the subsurface alignment structure 408. That is, due to the corresponding shape of the subsurface alignment structure 408 and the stabbing guide 402, the engagement point of engagement can occur when a top surface of the subsurface alignment structure contacts an upper inner surface of the stabbing guide 402. This engagement point (i.e., point of contact between the top surface of the subsurface alignment structure 408 and the upper inner surface of the stabbing guide 402) can define a point at which the stabbing guide 402 has been fully lowered on to the subsurface alignment structure 408.

FIG. 5 is a side view of an example of a stabbing guide 402 engaged with a subsurface alignment structure 408 according to some embodiments of the present disclosure. That is, FIG. 5 shows an example of a stabbing guide and subsurface alignment structure arrangement. As shown, the stabbing guide 402 can receive the subsurface alignment structure 408. More specifically, the tapered guide portion 404 of the stabbing guide 402 can receive the tapered guide portion 410 of the subsurface alignment structure 408.

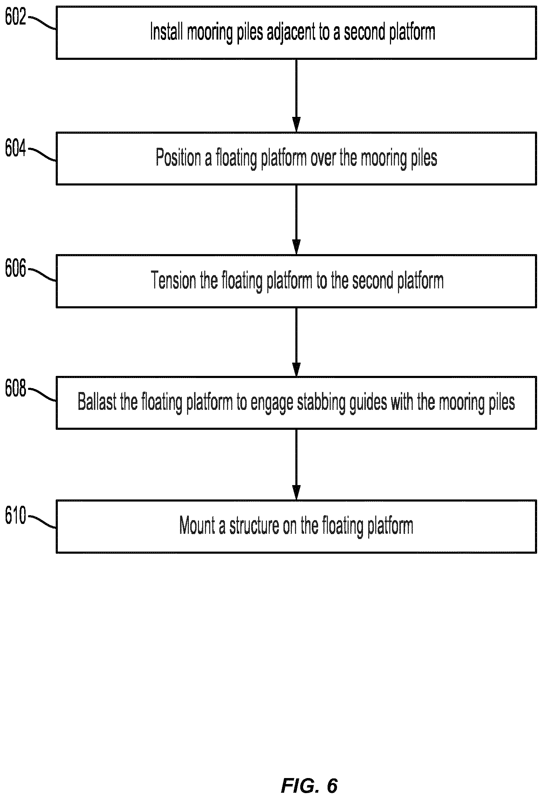

FIG. 6 is a flowchart of a process 600 for mounting a structure on a floating platform according to some examples of the present disclosure. In other examples, the process 600 can include more steps, fewer steps, different steps, or a different order of the steps depicted in FIG. 6. The steps of FIG. 6 are described below with reference to components discussed above in FIGS. 1-5.

At block 602, the process 600 can involve installing one or more subsurface alignment structures 224 adjacent to a second platform (e.g., a quay 302). The second platform (e.g., the quay 302) can be a platform positioned within, adjacent to, or projecting into a body of water. The subsurface alignment structures 224 can be installed adjacent the second platform in a floor of the body of water. More specifically, the subsurface alignment structures 224 can be installed in a location adjacent to the second platform above which a floating platform 200 is to be positioned and stabilized. Installation of the subsurface alignment structures 224 (e.g., mooring piles) may involve installing mud matts with guiding sleeves for the subsurface alignment structures 224. The subsurface alignment structures 224 can then be installed (i.e., pressed into the floor of the body of water) through the guiding sleeves using, for example, a hydraulic hammer. Once installed, a majority of a sleeve portion 226 of the subsurface alignment structures 224 can be embedded in the floor of the body of water, while a tapered guide portion 228 of the subsurface alignment structures 224 can protrude from the floor of the body of water. In this way, the tapered guide portions 228 of the subsurface alignment structures 224 can be received by stabbing guides 212 of the floating platform 200. In some examples, one subsurface alignment structure may be installed near the second platform, or, in other implementations, more than one subsurface alignment structure may be installed. In the example shown in FIGS. 2A-B, there are three subsurface alignment structures that can be installed adjacent to a second platform (e.g., quay 302 shown in FIG. 3).

At block 604, the process 600 can involve positioning the floating platform 200 over the one or more subsurface alignment structures 224. Positioning the floating platform 200 over the subsurface alignment structures 224 can include deploying the floating platform 200 into the body of water near the second platform. The floating platform 200 can then be positioned in the body of water such that the floating platform 200 is adjacent to the second platform and directly above (i.e., over) the subsurface alignment structures 224. Positioning the floating platform 200 over the subsurface alignment structures 224 may further include aligning the stabbing guides 212 of the floating platform 200 with the subsurface alignment structures 224. That is, the stabbing guides 212 can be positioned directly above and in line with the subsurface alignment structures such that the stabbing guides 212 will contact the subsurface alignment structures when the floating platform 200 is lowered (i.e., moved perpendicular to the floor of the body of water and in a direction from the surface of the body of the water toward the floor of the body of water).

In some examples, positioning the floating platform 200 over a subsurface alignment structure can involve positioning the floating platform 200 such that a stabbing guide is aligned with (e.g., directly above) the subsurface alignment structure. In other examples in which there is more than one subsurface alignment structure, positioning the floating platform 200 over the subsurface alignment structures can involve positioning the floating platform 200 such that there is a stabbing guide of the floating platform 200 aligned with (e.g., directly above) one of the subsurface alignment structures. An example of the positioning a floating platform 200 over subsurface alignment structures is shown in FIG. 2A.

To facilitate and maintain the positioning of the floating platform 200 over the subsurface alignment structures 224, the floating platform 200 can be moored to the second platform. For example, prior to deployment mooring lines, tension line receivers, or a combination thereof can be pre-installed at the floating platform 200. In other examples, the mooring lines, tension line receivers, or a combination thereof can be installed after deployment of the floating platform 200 into the body of water. After deployment, at least some of the mooring lines may be coupled on one end to tension line receivers of the floating platform 200 and on another end to tension line receivers on the second platform. A length of and/or tension on the mooring lines can maintain the positioning of the floating platform 200 over the subsurface alignment structures by resisting forces on the floating platform due to current, wind, or other environmental conditions that may cause the floating platform 200 to move out of its alignment directly above (i.e., over) the subsurface alignment structures. In a particular example, the floating platform 200 can be a semisubmersible platform for receiving a wind turbine 116. Additionally, in the particular example and as shown in FIG. 3, four tension line receivers 308a-d can be positioned at float columns 206a-c of the floating platform 200 and six mooring lines 310a-f can be coupled with the tension line receivers 308a-d of the floating platform and tension line receivers on the second platform (e.g., quay 302).

At block 606, the process 600 can involve tensioning the floating platform 200 to the second platform. Tensioning the floating platform 200 to the second platform (e.g., quay 302) can include coupling mooring lines on one end to the tension line receivers on the floating platform 20 and on another end tension line receivers on the second platform. An example of a floating platform 200 tensioned to a second platform via mooring lines is shown in FIG. 3. The tension line receivers 308a-d on the floating platform 200 can be a first set of tension line receivers located at top sides (e.g., within top half's and/or adjacent to top surfaces 218) of the float columns 206a-c. In other examples, the tension line receivers 308a-d on the floating platform 200 can be positioned at other locations of the top side of the floating platform, such as on upper connecting members 208 or other components. There can also be a second set of tension line receivers on the second platform. Some of the tension line receivers on the second platform can be bollards 314a-d or other suitable durable, stable structures located on the second platform and to which mooring lines can be coupled.

Thus, tensioning the floating platform 200 to the second platform can include at least some of the mooring lines (e.g., mooring lines 310a-d) extending between the tension line receivers 308a-d on the floating platform 200 and the bollards 314a-b on the second platform. Tensioning the floating platform 200 200 can then include tensioning the mooring lines 310a-d extending between the tension line receivers on the floating platform 200 and the tension line receivers (e.g., bollards 314a-b) on the second platform. Tensioning the mooring lines 310a-d can include using mooring lines with a relatively short length. The relatively short length of the mooring lines 310a-d can cause tension on the mooring lines 310a-d to resist lateral, tortional, or other forces on the floating platform while the mooring lines 310a-d extend between the tension line receivers 308a-d on the floating platform 200 and the tension line receivers (e.g, bollard 314a-b) on the second platform. For example, there may be buoys 312 between the floating platform 200 and the quay. Thus, the relatively short length of the mooring lines 310a-d may pull the floating platform 200 towards the second platform and therefore into the buoys 312. In this way, the position of the floating platform 200 adjacent to the second platform and above the subsurface alignment structures can be secured.

Additionally, some of the tension line receivers on the second platform can be tension devices 304a-b. Tension devices 304a-b can include winches or other suitable devices usable to adjust a length of associated mooring lines. Therefore, tensioning the floating platform 200 to the second platform can further include at least some of the mooring lines (e.g., mooring lines 310e-f) extending between the tension line receivers 308a-d on the floating platform 200 and the tension devices 304a-b on the second platform. Then, tensioning the mooring lines 310e-f extending between the tension line receivers on the floating platform 200 and the tension line receivers on the second platform can include adjusting a length of at least one of the mooring lines 310e-f using a tension device. In one example, adjusting the length of at least one of the mooring lines 310e-f using the tension device can include adjusting the length of at least one of the mooring lines using a winch positioned at a surface of the quay 302. An example of mooring line 310e-f extending between tension line receivers 308a-d on the quay 302 and tension devices 304a-b (e.g., winches) is shown in FIG. 3. The length of the mooring line that can be adjusted can be the length of an in-use portion of the mooring line. The in-use portion of the mooring line can be the portion of the mooring line that is under tension and that extends between a coupling point on the floating platform (e.g., a tension line receiver on the floating platform) and a coupling point on the second platform (e.g., a tension line receiver on the second platform).

The adjustability of the mooring line using the tension devices 304a-b can be used to fine tune the positioning and stability of the floating platform 200. For example, using the tension devices 304a-b to shorten one or more of the mooring lines can change a position of the floating platform 200 relative to the second platform (e.g., by moving the floating platform 200 closer to the second platform) and/or can increase tension on the mooring lines 31 0e-f, which may in turn increase stability of the floating platform 200. Alternatively, using the tension devices 304a-b to lengthen the mooring lines can position the floating platform 200 further from the second platform and/or decrease tension on the mooring lines 310e-f. This may be useful for proper positioning of the floating platform 200 above the subsurface alignment structures to, as described below, facilitate engagement of the stabbing guides 212 with the subsurface alignment structures.

At block 608, the process 600 can involve lowering the floating platform such that one or more stabbing guides engage with the one or more subsurface alignment structures. Lowering the floating platform 200 can include moving the floating platform 200 perpendicular to the floor of the body of water in a direction from the surface of the body of water toward the floor of the body of water. An example of a floating platform prior to be being lowered is shown in FIG. 2A and an example of the floating platform lowered such that stabbing guides 212 are engaged with subsurface alignment structures 224 is shown in FIG. 2B. Engagement of a stabbing guide with a subsurface alignment structure can include at least a portion of the subsurface alignment structure being received by at least a portion of the stabbing guide. For example, as shown in FIG. 2B, the subsurface alignment structures 224 can be received by (i.e., positioned within) the stabbing guides 212.

Additionally, in some examples, during lowering of the floating platform 200 in the body of water such that the stabbing guide 212 of the floating platform 200 engages the subsurface alignment structure 224, a tapered guide portion 214 of the stabbing guide 212 initially contacts the subsurface alignment structure 224 to guide the floating platform 200 into alignment with the subsurface alignment structure 224. For example, as shown in FIG. 4, a first lower section 406b of a stabbing guide can initially contact a second upper section 412a of a subsurface alignment structure 408. The tapering shape of the tapered guide portion (e.g., tapered guide portion 214 or 404) can facilitate the guiding of the floating platform 200 into alignment with the subsurface alignment structure (e.g., tapered guide portion 228 or 410).

In the example of FIG. 4, the tapered guide portion 404 of the stabbing guide 402 can include the first lower section 406b and a first upper section 406a. The first lower section 406b can be wider than the first upper section 406a. The subsurface alignment structure 408 (e.g., a mooring pile) can similarly have a tapered guide portion 410 with a second lower section 412b and the second upper section 412a. The second lower section 412b can be wider than the second upper section 412a. Therefore, in the example, while lowering of the floating platform 200 in the body of water such that the stabbing guide 212 of the floating platform 200 engages the subsurface alignment structure 224, a first lower section 406b of the tapered guide portion 214 can receive a second upper section 412a of the subsurface alignment structure 224. The first lower section 406b being a wider section of the stabbing guide 212 and the second upper section 412a being a thinner section of the subsurface alignment structure 224 can provide ample cross-sectional area in which the stabbing guide 212 can receive the subsurface alignment structure. Thus, the tapering shape of the tapered guide portion 214 can facilitate the guiding of the floating platform 200 into alignment with the subsurface alignment structure 224.

Alignment of the floating platform 200 with the subsurface alignment structure 224 can involve an entirety of a tapered guide portion 228 of the subsurface alignment structure 224 being received in a tightly fit fashion within a tapered guide portion 214 of the stabbing guide 212. The tight fit of the tapered guide portion 228 of the subsurface alignment structure 224 within the tapered guide portion 214 of the stabbing guide 212 can prevent movement of the floating platform 200 (i.e., align the floating platform 200 with the subsurface alignment structure 224). For example, as shown in FIG. 2B, the subsurface alignment structures 224 can be received by (i.e., positioned within) the stabbing guides 212.

In some examples, the floating platform 200 can be lowered in the body of water to engage a stabbing guide with a subsurface alignment structure. In other examples in which there is more than one subsurface alignment structure, the floating platform 200 can be lowered in the body of water such that a stabbing guide can engage with each of the subsurface alignment structures. An example of floating platform 200 that is lowered such that the stabbing guides 212 are engaged with subsurface alignment structures 224 is shown in FIG. 2B.

To facilitate the lowering of the floating platform 200, the float columns 206a-c of the floating platform 200 may be hollow or partially hollow and may define internal ballast receiving volumes 202a-c for containing ballasting liquid 204a-c The float columns 206a-c may extend between a top side of the floating platform 200 and a bottom side of the floating platform 200. The top side of the floating platform 200 can be a top half of the floating platform 200 in which the upper connecting members 208 or other components may be positioned. The top side of the floating platform can include the top surfaces 218 of the float columns. The bottom side of the floating platform can be a bottom half of the floating platform 200 in which the lower connecting members 210 or other components may be positioned. The stabbing guides 212 can be located at the bottom side of the floating platform 200.

At least some of the float columns 206a-c may also include a corresponding intake port for fluid communication with a body of water in which the floating platform 200 is deployed. Therefore, lowering the floating platform can include adding ballasting liquid to the floating platform 200. More specifically, in some examples, adding ballasting liquid to the floating platform can include adding the ballasting liquid to the float columns 206a-c of the floating platform 200. Adding the ballasting liquid to floating platform 200 (e.g., into the internal ballast receiving volumes 202a-c of the float columns 206a-c of the floating platform 200) can increase a weight of the floating platform 200, thereby causing the floating platform 200 to lower (i.e., move in a direction from the surface of the body of the water to the floor of the body of water).

In some implementations, other components of the floating platform 200 may also have an internal volume for receiving ballasting liquid and/or ports for fluid communication with the body of water. For example, the lower connecting members 210, which can act as pontoons, can have internal ballast receiving volumes 210a-c for receiving ballasting liquid. The lower connecting members 210 may also have intake ports for fluid communication with the body of water. Water may be selectively transferred between the internal ballast volumes of the floating platform 200 and the body of water via the intake ports. In other examples, ballasting liquid can be transferred to and from the internal ballast volumes using other techniques. In either case, adding ballasting liquid (e.g., water) to the internal ballast volumes of any component of the floating platform (e.g., the lower connecting members 210, the float columns 206a-c, or a combination thereof) can lower the floating platform 200 with respect to a surface of the body of water.

As a result of lowering the floating platform 200, a tapered guide portion 214 of each stabbing guide 212 can contact a subsurface alignment structure 224. The contact can guide the floating platform 200 into alignment with the subsurface alignment structures 224 positioned adjacent to the second platform. The subsurface alignment structures 224 may have tapered guide portions 228 that can be received by and fit into one of the tapered guide portions 214 of the stabbing guides 212. As a result of aligning and engaging the stabbing guides 212 with subsurface alignment structures 224 on the floor of the body of water, the floating platform 200 can be at least partially stabilized. That is, aligning and engaging the stabbing guides 212 with the subsurface alignment structures 224 can prevent tipping or other undesirable movements of the floating platform 200.

At block 610, the process 600 can involve mounting a structure on the floating platform. At block 610, the floating platform 200 can be moored to the second platform and the stabbing guides 212 can be engaged with the subsurface alignment structures. The combination of mooring the floating platform 200 to the second platform and engaging the stabbing guides 212 with the subsurface alignment structures 224 can stabilize the floating platform 200 for mounting the structure. That is, the combination of mooring the floating platform 200 to the second platform and engaging the stabbing guides 212 with the subsurface alignment structures 224 can prevent undesirable movements of the floating platform 200 while mounting the structure. The structure may be a wind turbine 116 with a support (e.g., a vertically extending tower 118) or another structure that can support a nacelle and rotor blades). The structure may be mounted on a mounting surface of the floating platform 200, such as on a top surface of one of the float columns 206a-c. In one example, mounting the structure on the floating platform can include mounting a vertically extending tower 118 of a wind turbine 116 on at least one of the float columns of the floating platform. An example of a vertically extending tower 118 of a wind turbine 116 mounted on a first float column 106a is shown in FIG. 1.

The foregoing description of certain examples, including illustrated examples, has been presented for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A method for mounting a structure on a floating platform, the method comprising:
positioning a floating platform over a subsurface alignment structure in a body of water;
lowering the floating platform in the body of water such that a stabbing guide of the floating platform engages the subsurface alignment structure;
tensioning the floating platform to a second platform; and
mounting a structure on the floating platform with the stabbing guide engaged with the subsurface alignment structure and the floating platform tensioned to the second platform.

2. The method of claim 1, wherein during lowering of the floating platform in the body of water such that the stabbing guide of the floating platform engages the subsurface alignment structure, a tapered guide portion of the stabbing guide initially contacts the subsurface alignment structure to guide the floating platform into alignment with the subsurface alignment structure, wherein the subsurface alignment structure engaged by the stabbing guide is a mooring pile.

3. The method of claim 2, wherein during lowering of the floating platform in the body of water such that the stabbing guide of the floating platform engages the subsurface alignment structure, a first lower section of the tapered guide portion receives a second upper section of the mooring pile, wherein the tapered guide portion is a first tapered guide portion that comprises the first lower section and a first upper section, wherein the first lower section is wider than the first upper section, wherein the mooring pile comprises a second tapered guide portion with a second lower section and the second upper section, wherein the second lower section is wider than the second upper section.

4. The method of claim 1, wherein lowering the floating platform comprises adding a ballasting liquid to the floating platform, comprising adding the ballasting liquid to a plurality of float columns of the floating platform, the float columns extending between a top side and a bottom side of the floating platform.

5. The method of claim 4, wherein lowering the floating platform in the body of water such that the stabbing guide of the floating platform engages the subsurface alignment structure comprises lowering the floating platform in the body of water such that a plurality of stabbing guides located on the plurality of float columns at the bottom side of the floating platform engage a plurality of subsurface alignment structures.

6. The method of claim 5, wherein tensioning the floating platform to the second platform comprises tensioning a plurality of mooring lines extending between a first plurality of tension line receivers located at the top side of the floating platform and a second plurality of tension line receivers on the second platform, the second platform comprising a quay.

7. The method of claim 6, wherein tensioning the plurality of mooring lines extending between the first plurality of tension line receivers and the second plurality of tension line receivers comprises adjusting a length of at least one of the plurality of mooring lines using a tension device.

8. The method of claim 7, wherein adjusting the length of at least one of the plurality of mooring lines using the tension device comprises adjusting the length of the at least one of the plurality of mooring lines using a winch positioned at a surface of the quay.

9. The method of claim 1, wherein mounting the structure on the floating platform comprises mounting a vertically extending tower of a wind turbine on at least one of the plurality of float columns.

10. A floating platform system comprising:
a floating platform;
a ballast receiving volume inside the floating platform, the ballast receiving volume being a volume within the floating platform in which a ballasting liquid is received;
a mounting surface on the floating platform, the mounting surface being a surface on the floating platform to which a structure is mounted; and
the floating platform further comprising a stabbing guide;
optionally, wherein the mounting surface is a wind turbine support mounting surface on one of the plurality of float columns.

11. The floating platform system of claim 10, wherein the stabbing guide is a mooring pile receiving stabbing guide.

12. The floating platform system of claim 11, wherein the stabbing guide comprises a tapered guide portion; wherein the tapered guide portion comprises a lower section and an upper section, wherein the lower section is wider than the upper section; or, wherein the tapered guide portion comprises a frustoconical shape.

13. The floating platform system of claim 10, wherein the floating platform comprises a top side, a bottom side, and a plurality of float columns extending between the top side and the bottom side, wherein the plurality of float columns comprise the ballast receiving volume.

14. The floating platform system of claim 13, wherein the stabbing guide comprises a plurality of stabbing guides located at the bottom side of the floating platform; optionally, wherein at least some of the stabbing guides are located on the plurality of float columns.

15. The floating platform system of claim 13, wherein the floating platform further comprises a plurality of tension line receivers located at the top side of the floating platform.
